Europäisches Patentamt

European Patent Office

Office européen des brevets

(19)

(11) Numéro de publication: **0 298 804 B1**

(12)

# FASCICULE DE BREVET EUROPEEN

(45) Date de publication de fascicule du brevet: **14.04.93**  (51) Int. Cl.⁵: **G06F 1/04**, G06F 7/68

(21) Numéro de dépôt: **88401509.0**

(22) Date de dépôt: **17.06.88**

(54) **Procédé et dispositif de synthèse numérique d'un signal d'horloge.**

(30) Priorité: **26.06.87 FR 8709029**

(43) Date de publication de la demande:
**11.01.89 Bulletin 89/02**

(45) Mention de la délivrance du brevet:
**14.04.93 Bulletin 93/15**

(84) Etats contractants désignés:
**DE GB IT**

(56) Documents cités:
**FR-A- 2 592 244**

**IBM TECHNICAL DISCLOSURE BULLETIN, vol. 17, no. 10, mars 1975, page 235, New York, US; F.E. STUEBNER: "Clock pulse generators with adjustment for cycle length"**

**IBM TECHNICAL DISCLOSURE BULLETIN, vol. 10, no. 3, août 1967, page 235, New York, US; H. DEUTSCH et al.: "Digitally programmable derived clock"**

(73) Titulaire: **THOMSON-CSF**
**51, Esplanade du Général de Gaulle**
**F-92800 Puteaux(FR)**

(72) Inventeur: **Roullet André**
**THOMSON - CSF SCPI - 19, avenue de Messine**
**F-75008 Paris(FR)**
Inventeur: **Dartois Luc**
**THOMSON - CSF SCPI - 19, avenue de Messine**
**F-75008 Paris(FR)**

(74) Mandataire: **Lincot, Georges et al**
**THOMSON-CSF, SCPI, B.P. 329, 50, rue Jean-Pierre Timbaud**
**F-92402 Courbevoie Cédex (FR)**

## Description

La présente invention concerne un procédé et un dispositif de synthèse numérique d'un signal d'horloge.

Elle s'applique, à la réalisation de générateurs de signaux d'horloge pour les radiocommunications et notamment pour la construction des systèmes de transmission à saut de fréquence, dont la fréquence change très rapidement dans le temps par paliers successifs.

Dans ces systèmes, les signaux d'horloge peuvent être utilisés tels quels, ou être recopiés au moyen de boucles à verrouillage de phase pour améliorer les caractéristiques de bruit lointain grâce à l'effet de filtrage exercé par les boucles. Plus généralement, ils peuvent servir d'horloge de référence dans une des boucles d'un synthétiseur de fréquence employant un comparateur numérique du type phase-fréquence, par exemple, dans une boucle d'addition, afin d'en permettre la transposition dans une gamme quelconque de fréquences.

Outre le fait que ces générateurs doivent posséder une bonne qualité spectrale tout en étant généralement modulables en phase et en fréquence, leur utilisation à bord d'engins terrestres ou spatiaux par exemple, exige qu'ils consomment peu d'énergie et qu'ils occupent un volume le plus faible possible.

L'une des solutions connues, satisfaisant en grande partie aux caractéristiques citées, consiste à réaliser un synthétiseur de fréquence dont tout ou partie est constitué par un synthétiseur numérique direct, c'est-à-dire n'incluant pas de boucle à verrouillage de phase. Suivant cette solution, le synthétiseur numérique est organisé autour d'un circuit accumulateur ou d'un circuit numérique séquentiel dont le contenu augmente d'une quantité déterminée à chaque impulsion d'un signal fourni par une horloge locale. Ce circuit comprend habituellement un additionneur dont la sortie est reliée à un registre à verrouillage commandé par un signal d'horloge. La sortie du registre à verrouillage est rebouclée sur une des entrées de l'additionneur et l'autre entrée constitue l'entrée de l'accumulateur. Dans bons nombres d'applications et notamment celles visées par l'invention, l'accumulateur est aussi appelé "accumulateur de phase" car dans ce cas, le terme numérique $\Delta P$ qui est appliqué à son entrée constitue un incrément de phase par une unité d'horloge $T_c$ du signal de sortie. Ce terme détermine la vitesse de variation de phase au cours du temps, c'est-à-dire sa fréquence. Le nombre de bits mémorisables dans l'accumulateur définit la capacité $N$ de celui-ci. Celle-ci est égale à $M = 2^N$ dans le cas d'un codage binaire. Dans ces conditions, l'opération d'addition qui est effectuée à chaque front d'horloge peut être considérée comme une opération d'addition modulo $M$, du type vérifiant une relation de la forme

$$P_K = K.\Delta P \bmod M$$
$$\text{avec } 0 \leq \Delta P < M$$

où $K$ est le nombre de périodes d'horloge de calcul $T_c$ et $P_K$ est le nombre binaire obtenu à la sortie de l'accumulateur à l'instant $t_K = K.T_c$

Lorsque la quantité $K.\Delta P$ est supérieure ou égale à $M$ un signal de retenue $R_K$ apparaît à la sortie de l'additionneur pendant une durée égale à la période $T_c$ du signal d'horloge. $P_K$ s'écrit alors à l'instant du débordement :

$$P_K = M-K.\Delta P < \Delta P \text{ et } R_K = 1.$$

Par principe, la valeur $M$ est l'image d'une phase de $2\pi$ radians. A chaque fois qu'il y a débordement de l'accumulateur, il y a donc une rotation de $2\pi$ radians, et la périodicité $T_s$ des débordements vérifie des relations de la forme :

$$T_S = (M/\Delta P).T_c$$
$$\text{ou } F_S = (\Delta P/M). F_c = \frac{1}{T_s}$$

Cependant ces relations ne sont totalement vérifiées que lorsque le reste de la division euclidienne de $M$ par $\Delta P$ est nul, ce qui n'est vrai qu'en moyenne dans les autres cas. En effet, lorsque $M$ n'est pas divisible par $\Delta P$, le temps $T'_s$ qui s'écoule entre deux débordements successifs est toujours un multiple entier d'horloge $T_c$ et fluctue d'une unité de $T_c$. Ceci définit le degré de précision temporelle avec laquelle peut être obtenue l'horloge $T_s$. Naturellement, pour augmenter la précision de l'horloge $T_s$ , il faut réduire la période d'horloge de calcul $T_c$ mais rapidement cette solution devient impraticable du fait des limitations technologiques des circuits intégrés numériques. En définitive, une horloge synthétisée de cette façon présente toujours une modulation en position de son front montant au cours du temps. Ceci peut être traduit en terme de gigue de phase ou modulation de phase parasite dont l'amplitude crête à crête est d'une période de $T_c$ ramenée à la période du signal synthétisé $T_s$. L'indice de modulation $m$ est alors

$$m = (1/2).(T_c/T_s).2\pi$$

A titre d'exemple, si $m$ est inférieur à 0,3 les amplitudes des raies parasites obtenues sont données avec une bonne approximation par une fonction de Bessel du premier ordre $J_1(m)$ soit $m/2$.

Une manière de procéder qui permet de réduire de façon notable la gigue de phase est connue de la publication de brevet FR-A-2 592 244 déposée au nom de la Demanderesse ayant pour titre "Synthétiseur numérique de fréquence élevée à correction apériodique optimalisant la vitesse spectrale". Suivant cette solution l'accumulateur est réalisé à la manière d'un réseau systolique pour fonctionner à la fréquence la plus élevée possible et une interpolation analogique temporelle de la position du front du signal de sortie est calculée. Celle-ci est initialisée par l'instant de coïncidence entre une rampe de tension déclenchée par le débordement de l'accumulateur et de la tension de sortie d'un convertisseur numérique-analogique commandé par une information d'erreur de temps résultant d'un calcul préalable. Cependant cette solution requiert l'usage de circuits analogiques rapides dont la linéarité est fondamentale pour obtenir de bons résultats. Il en résulte des réglages qui compliquent la mise en oeuvre de cette méthode.

Le but de l'invention est de pallier les inconvénients précités.

A cet effet, l'invention a pour objet, un procédé de synthèse numérique d'un signal d'horloge, du type dans lequel le signal d'horloge à synthétiser est obtenu à partir d'une donnée incrémentale de phase $\Delta P$ représentative de la fréquence à synthétiser qui consiste à effectuer à chaque période $T_c$ d'un signal d'horloge de calcul l'addition modulo un nombre binaire M de chaque incrément de phase à la somme modulo M des incréments de phase déjà totalisés à l'intérieur d'un dispositif accumulateur de phase de capacité égale au nombre binaire M, et à générer un signal du dépassement de capacité $R_{KM}$ caractérisé par les étapes de lire après chaque dépassement de capacité du dispositif accumulateur l'erreur de phase résiduelle $P_K$ restante contenue dans le dispositif accumulateur, générer $2^Q$ signaux d'horloge de période $T_c$ déphasés entre eux de $T_c/2^Q$, Q étant un nombre entier positif non nul prédéfini, calculer après chaque dépassement, l'erreur temporelle $\Delta t_K$, en effectuant le rapport

$$\frac{P_K}{\Delta P}$$

entre l'erreur de phase résiduelle $P_K$ et l'incrément de phase $\Delta P$ par période $T_c$ et à sélectionner en fonction de l'erreur temporelle $\Delta t_K$ calculée le signal d'horloge dont le déphasage par rapport à l'horloge de calcul est le plus proche de la phase résiduelle lue, afin de générer, sous le contrôle dudit signal de dépassement de capacité $R_{KM}$, le signal d'horloge ($F_SF_i$) à synthétiser.

L'invention a également pour objet un dispositif pour la mise en oeuvre du procédé précité.

Elle a pour principal avantage qu'elle permet la synthèse en bande de base de signaux depuis les plus basses fréquences jusqu'aux fréquences élevées, de l'ordre de 50 MHz à 80 MHz avec la technologie actuelle pouvant commuter en moins d'une microseconde avec des résolutions possibles en fréquence jusqu'en dessous du Hz, sans nécessiter de réglages, du fait de la solution entièrement numérique qui est mise en oeuvre.

Un autre avantage est qu'elle permet des réalisations de circuits à haute intégration de composants suivant les techniques HCMOS par exemple, pour les fréquences inférieures à 80 MHz ou encore les techniques ECL pour les fréquences comprises entre 300 à 500 MHz.

D'autres caractéristiques et avantages de l'invention apparaîtront ci-après à l'aide de la description faite en regard des dessins annexés qui représentent :

- Les figures 1a, 1b, 1c et 2a, 2b, 2c des graphes de temps illustrant le fonctionnement des synthétiseurs numériques directs de l'art antérieur.
- La figure 3 un mode de réalisation d'un synthétiseur numérique selon l'invention.
- La figure 4 un mode de réalisation du circuit de calcul gros de la période du circuit représenté à la figure 3.
- La figure 5 un tableau représentant des valeurs numériques en différents points du circuit de la figure 4.
- Les figures 6A et 6B un mode de réalisation du circuit de calcul fin de la phase du circuit représenté à la figure 3.
- La figure 7 un tableau représentant des valeurs numériques obtenues en différents points du circuit des figures 6A et 6B.
- La figure 8 un mode de réalisation du circuit de sélection de la phase d'horloge représenté à la figure 3.
- La figure 9 un tableau de résultats de calculs obtenus avec le circuit de la figure 8.
- La figure 10 un chronogramme montrant comment est synthétisé un signal d'horloge à faible gigue.
- La figure 11 un mode de réalisation du circuit générateur d'horloges déphasées de la figure 3.
- La figure 12 un chronogramme pour illustrer le fonctionnement du circuit représenté à la figure 11.
- La figure 13 un tableau de paramètres caractéristiques d'une réalisation du dispositif selon l'invention dans le cas d'une fréquence de référence de 400 MHz.

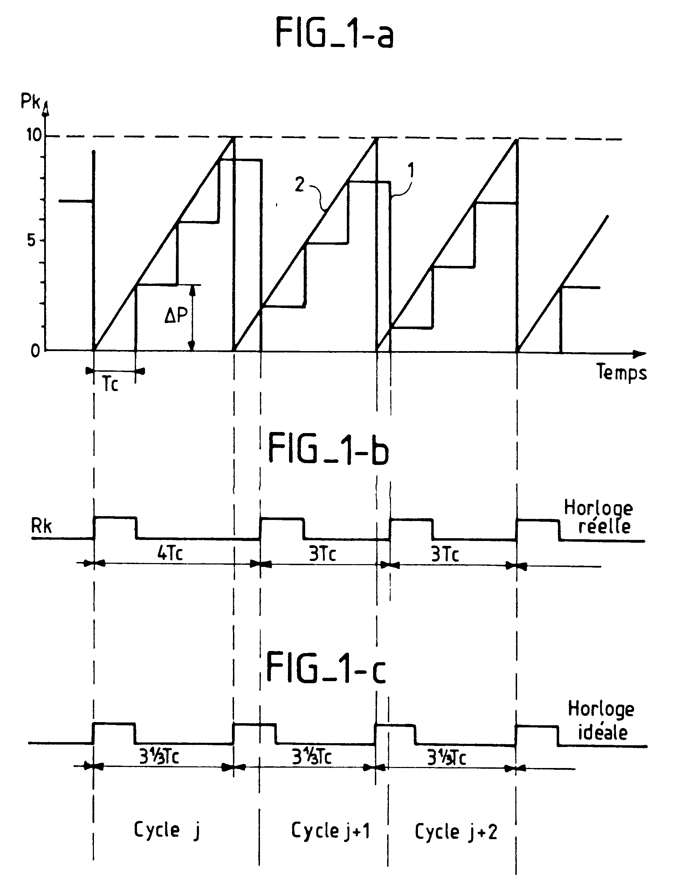

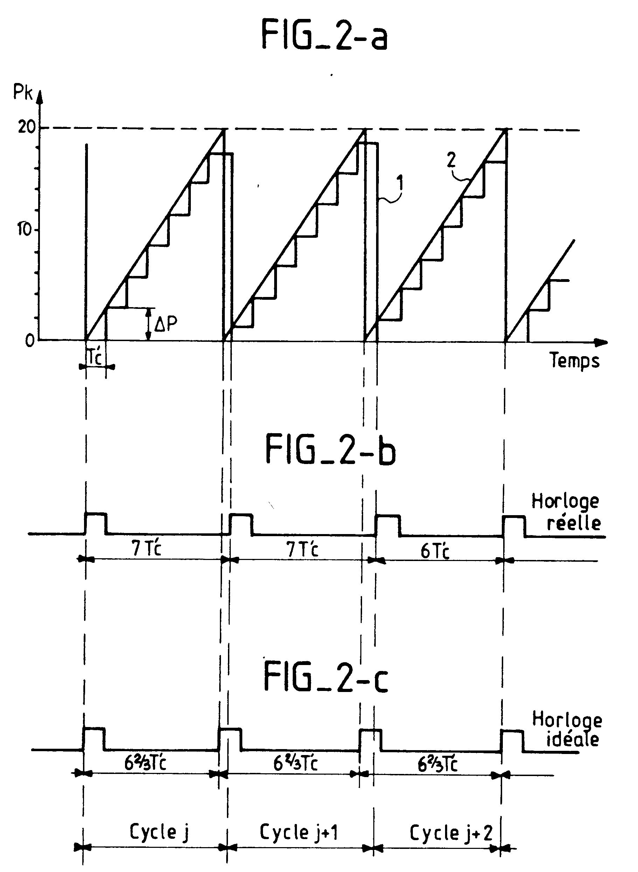

Avant de passer à la description proprement dite de l'invention, une illustration du phénomène de gigue de phase exposé précédemment à propos des synthétiseurs numériques de l'art antérieur, est donnée aux figures 1 et 2 de façon à bien situer le problème que vise à résoudre l'invention. Le diagramme représenté à la figure 1 correspond à un exemple numérique pour lequel la capacité M de l'accumulateur est fixé à 10 et la variation de phase $\Delta P$ égale à 3. Dans ce cas, en reprenant les notations définies précédemment, $P_K$ prend la suite des valeurs 7, 0, 3, 6, 9, 2, 5, 8, 1, 4, 7, 0, 3, 6, 9, 2 etc Les valeurs soulignées donnent lieu à un signal de débordement $R_K$ de l'additionneur et on obtient ainsi des valeurs successives de la période $T'_s$ de l'horloge réelle telle que $4T_c$, $3T_c$, $3T_c$, $4T_c$ etc

Ainsi sur dix périodes d'horloge de calcul, il y a trois débordements et par conséquent, la valeur moyenne de la fréquence est égale à

$$F_s = 3/(4.T_c + 3.T_c + 3.T_c) = 0,3.F_c$$

Ces résultats sont représentés par les graphes de temps représentés aux figures 1a, 1b et 1c. Sur la figure 1a la suite des valeurs $P_K$ est représentée par une courbe C1 en marches d'escalier comparativement à une courbe C2 qui représente la courbe de phase idéale du signal synthétisé. Les figures 1b et 1c correspondent respectivement aux courbes C1 et C2 et donnent la position des signaux de débordement $R_K$ successifs dans le cas réel d'un accumulateur de phase et dans le cas d'une horloge synthétisée de façon idéale.

L'écart temporel entre les horloges réelle et idéale est alors aux cycles j, j + 1 et j + 2 de l'horloge réelle respectivement $(2/3).T_c$, $(1/3).T_c$ et 0. L'horloge réelle est toujours en retard ou au mieux en phase par rapport à l'horloge idéale et son retard est proportionnel au contenu $P_K = 2, 1, 0$ de l'accumulateur au moment où apparaît le débordement.

Dans l'exemple représenté, la courbe C1 est une approximation de la courbe C2. On améliore l'approximation en augmentant le nombre de points de calcul de la phase dans l'intervalle $(0,2\pi)$. Ceci est obtenu notamment en diminuant la période de l'horloge de calcul et en diminuant l'incrément de phase $\Delta P$, ou encore, ce qui revient au même, en augmentant la capacité M de l'accumulateur.

Sur les figures 2a, 2b, 2c, il est montré comment les chronogrammes précédents peuvent évoluer pour une même fréquence synthétisée. Selon les cycles j, j + 1 et j + 2 représentés, l'écart temporel entre les horloges réelles et idéales devient $(1/3).T'_c$, $(2/3).T'_c$ et 0, mais comme $T'_c = T_c/2$ la définition de $T_s$ est améliorée dans un rapport de 2.

Comme indiqué précédemment la précision de l'horloge $T_s$ peut être améliorée en réduisant la période de l'horloge calcul $T_c$. Cependant cette amélioration trouve rapidement une limite en haute fréquence celle-ci étant liée à la vitesse de réaction des circuits utilisés.

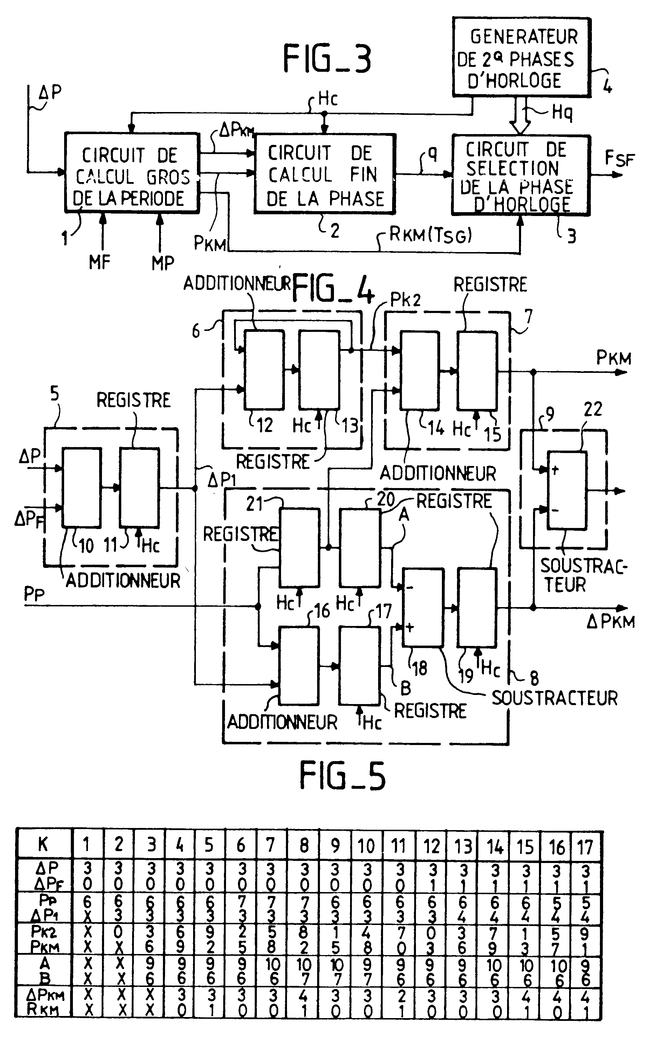

L'invention qui est décrite ci-après à l'aide des figures 3 à 13 apporte un perfectionnement notable aux dispositifs connus de l'art antérieur, en ce sens qu'il permet de réduire la gigue de phase dans un rapport constant sur une plage étendue de fréquences et par des moyens numériques.

Le dispositif, selon l'invention, qui est représenté à la figure 3, comprend un circuit 1 de calcul gros de la période du signal à synthétiser, un circuit 2 de calcul fin de la phase, un circuit 3 de sélection de la phase d'horloge et un générateur 4 de $2^Q$ phases d'horloge. Le premier circuit 1 de calcul gros de la période du signal à synthétiser reçoit, sur une première entrée le signal d'horloge de calcul $H_c$ fourni par le générateur d'horloges 4, sur une deuxième entrée l'incrément de phase $\Delta P$, sur une troisième entrée un signal de modulation en fréquence MF et sur une quatrième entrée un signal de modulation en phase MP. Le circuit 1 délivre respectivement sur trois sorties, une valeur d'incrément de phase $\Delta P_{KM}$, une valeur d'erreur de phase $P_{KM}$ et un signal $R_{KM}$ représentant la pseudo-période $T_{SG}$ du signal d'horloge avec une précision temporelle au mieux égale à la période $T_c$ du signal d'horloge de calcul $H_c$. L'erreur de phase $P_{KM}$ et le signal $R_{KM}$ apparaissent simultanément à la sortie du circuit de calcul gros 1 lorsque $R_{KM}$ apparaît. Les valeurs d'incrément $\Delta P_{KM}$ et l'erreur de phase $P_{KM}$ sont appliquées respectivement sur une première et une deuxième entrée du circuit de calcul fin de la phase 2, une troisième entrée de ce circuit recevant le signal d'horloge de calcul $H_c$. Le circuit 2 permet en tenant compte de l'erreur de phase $P_{KM}$ sur le signal $T_{SG}$ et de la période idéale donnée par l'incrément de phase $\Delta P_{KM}$, de déterminer, à l'intérieur d'un intervalle de temps $T_C$ où $2^{Q+1}$ points équidistants sont placés et numérotés de 0 à $2^Q$, quel est le point qui se rapproche au mieux de la position temporelle de l'horloge idéale, ce circuit de calcul étant constitué, principalement, comme cela sera décrit ci-après par un diviseur numérique du type pipe-line dont les étages travaillent au rythme de l'horloge de calcul de période $T_c$. Le résultat de calcul q est appliqué par le circuit 2 sur une première entrée du circuit de sélection de phase d'horloge 3. Le circuit 3 possède également une deuxième entrée sur laquelle est appliquée le signal $R_{KM}$ fourni par la troisième sortie du circuit 1 de calcul gros de la période et une troisième entrée sur laquelle est appliquée par un bus $H_q$, $2^Q$ horloges de périodes égales à $T_c$, déphasées entre elles de $2\pi/2^Q$ et fournies par le générateur d'horloges 4. Le numéro résultant q fourni par le circuit de calcul fin 2 est validé par le signal $R_{KM}$ de débordement d'accumulateur à l'intérieur du circuit de sélection de la phase d'horloge 3.

Une représentation détaillée du circuit de calcul gros de la période 1 est représentée à la figure 4. Il se compose de cinq blocs référencés de 5 à 9 à l'intérieur de lignes en pointillés. Le bloc 5 comprend un circuit additionneur 10 suivi d'un registre 11. L'additionneur réalise l'addition algébrique des grandeurs $\Delta P$ et $\Delta P_F$ qui définissent par unité de temps de calcul, les incréments de phase $\Delta P$ du signal à synthétiser $F_S$ et $\Delta P_F$ de l'excursion instantanée de fréquence $\Delta F$ lorsque le signal $F_S$ est modulé en fréquence.

En pratique $\Delta P$ et $\Delta P_F$ sont deux grandeurs numériques dont l'une, $\Delta P$, est fixe au cours du temps ou sur un palier de durée limitée et l'autre, $\Delta P_F$, est variable selon la loi de modulation de fréquence à obtenir, et la relation

$$0 \leq |\Delta P_F| < \Delta P < M$$

est toujours vérifiée. Si N est le nombre maximal de bits définissant $\Delta P$, M est alors défini par $M = 2^N$. Le registre 11 prend en compte le résultat de calcul obtenu à la sortie du circuit additionneur 10 à chaque front montant de l'horloge de calcul $H_c$.

Le bloc 6 qui constitue l'accumulateur de phase, réalise l'intégration numérique du signal d'entrée modulo M. Il comprend un circuit additionneur 12 et un registre accumulateur 13 pour la prise en compte du résultat de calcul fourni par le circuit additionneur 12 à chaque instant d'horloge $H_c$. Le circuit additionneur 12 est relié par une première entrée d'opérande à la sortie du registre 11 du bloc 5 et par une deuxième entrée d'opérande à la sortie du registre 13. Le bloc 5 transforme l'information d'entrée $\Delta P_1$ d'incrément de phase par unité de temps fournie par le registre 11 en une information de phase $P_{K2}$ à la sortie du registre 13. Le bloc 6 travaille sur une dimension de N bits.

Le bloc 7 permet le calcul de l'erreur de phase $P_{KM}$, ce calcul étant effectué en ajoutant modulo M la modulation de phase $P_p$ à l'information de phase $P_{K2}$ venant du bloc 6. Il se compose d'un circuit additionneur 14 suivi d'un registre 15 qui prend en compte les résultats de calcul fournis par le circuit additionneur 14 à chaque instant d'horloge $H_c$. Une première entrée d'opérande du circuit additionneur 14 est reliée directement à la sortie du registre 13. La modulation de phase $P_p$ est appliquée sur la deuxième entrée d'opérande du circuit additionneur 14 au travers du bloc 8. Le registre 15 assure la synchronisation des données. Dans ce montage le bit de signe n'est pas transmis puisque on ne s'intéresse ici qu'à la phase modulo $2\pi$ du signal, c'est-à-dire à la valeur numérique de l'erreur de phase $P_{KM}$ modulo M du signal modulé. La grandeur numérique d'entrée $P_p$ représente l'amplitude instantanée de la modulation de phase, elle est variable au cours du temps et sa variation dépend de la loi de modulation. $P_p$ satisfait la relation : $0 \leq |P_p| < M$

De même qu'en modulation de fréquence, on admettra que la fréquence du signal modulant est sensiblement plus petite que la fréquence du signal à synthétiser non modulé.

Cependant l'introduction de la modulation de phase fait apparaître une ambiguïté pour la détermination des informations $R_{KM}$ et $\Delta P_{KM}$.

En effet, l'information de sortie $P_{KM}$ du bloc 7 résulte de l'addition algébrique des grandeurs $P_p$ et $P_{K2}$. En donnant par exemple à $P_{K2}$ la suite des valeurs 0, 3, 6, 9, 2, 5, 8, 1 etc et en supposant par exemple que $P_p$ vaut 6 on obtient une suite de valeurs pour $P_{KM}$ = 6, 9, $\underline{2}$, 5, 8, $\underline{1}$, 4, 7 etc où les valeurs soulignées indiquent l'existence d'une retenue. Il n'est donc pas possible de prendre celle-ci pour information $R_{KM}$ puisque celle-ci apparaît deux fois de suite. Cette difficulté peut être surmontée en effectuant les différences entre les valeurs successives de l'erreur $P_{KM}$, soit, en reprenant les valeurs de $P_{KM}$ données en exemple, (9-6),(2-9), (5-2), (8-5), (1-8), (4-1), (7-4) ... etc et en prenant pour valeur de $R_{KM}$ le signe de la différence. Si la différence est négative, c'est que la phase vient de franchir la capacité M de l'accumulateur et que $R_{KM}$ vaut 1. Dans le cas contraire si la différence est positive $R_{KM}$ vaut 0.

L'information $\Delta P_{KM}$ donnant la valeur d'incrément de phase peut être prise en sortie du bloc 5 mais dans ce cas la valeur obtenue sera indépendante de la modulation de phase $P_p$. Ceci peut être sans importance si la modulation de phase $P_p$ garde une valeur constante ou nulle au cours du temps. Par contre, dans le cas contraire comme les variations de la modulation de phase $P_p$ modifient la pente de variation de l'erreur $P_{KM}$ en sortie du bloc 7 elles doivent être prises en compte au même titre que les valeurs $\Delta P$ et $\Delta P_F$ dans l'évaluation de l'incrément de phase $\Delta P_{KM}$, qui conduit au franchissement de la capacité M du circuit additionneur 14 et à l'obtention de l'information $R_{KM}$ = 1.

Pour tenir compte de ces paramètres l'information $\Delta P_{KM}$ est obtenue au moyen du bloc 8 qui effectue la différence entre deux valeurs successives de $P_p$ à la valeur $\Delta P_1$ issue du bloc 5. Le bloc 8 comprend les éléments référencés de 16 à 21. Un circuit additionneur 16 suivi d'un registre à bascule 17 effectue l'addition entre l'information la plus récente de $P_p$ et la valeur $\Delta P_1$ fournie par le bloc 5. Un circuit soustracteur 18 suivi d'un registre 19 effectue la différence entre le résultat précédent obtenu à la sortie du registre 17 et la valeur immédiatement antérieure de $P_p$ fournie à la sortie d'un registre 20. Le registre 20 reçoit la modulation de phase $P_p$ au travers d'un registre 21. Les calculs sont effectués sur des longueurs de N + 1 bits plus un bit de signe. Le résultat $\Delta P_{KM}$ obtenu est toujours positif par définition puisque la fréquence synthétisé ne peut devenir négative. Enfin, le bloc 9 comprend un circuit soustracteur 22 couplé par une première entrée d'opérande à la sortie du registre 15 du bloc 7 et par sa deuxième entrée d'opérande à la sortie du registre 19 du bloc 8. Le circuit soustracteur 22 fournit l'information $R_{KM}$ qui, pour une raison de commodité n'est autre que la valeur du signe de la différence entre la sortie du bloc 7 fournissant l'erreur de phase $P_{KM}$ et la sortie du bloc 8 fournissant par l'intermédiaire du registre 19 l'incrément de phase $\Delta P_{KM}$. Cette opération conduit au même résultat que celle déjà décrite précédemment consistant à effectuer la différence entre deux valeurs successives $P_{KM}$, cependant, elle apparaît beaucoup plus exploitable en ce sens que lorsque $R_{KM}$ vaut 1 on sait qu'il vient d'y avoir un dépassement de capacité du fait de l'addition modulo M et que le résultat $P_{KM}$ est nécessairement inférieur à l'incrément $\Delta P_{KM}$ qui lui a donné naissance.

Des résultats numériques obtenus pour diverses valeurs de K en différents points du circuit représentés à la figure 4 sont consignés suivant le tableau de la figure 5.

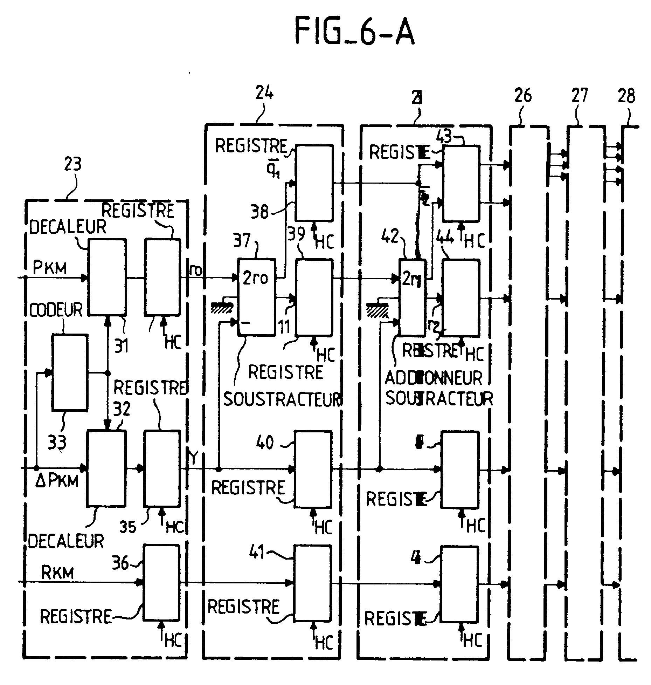

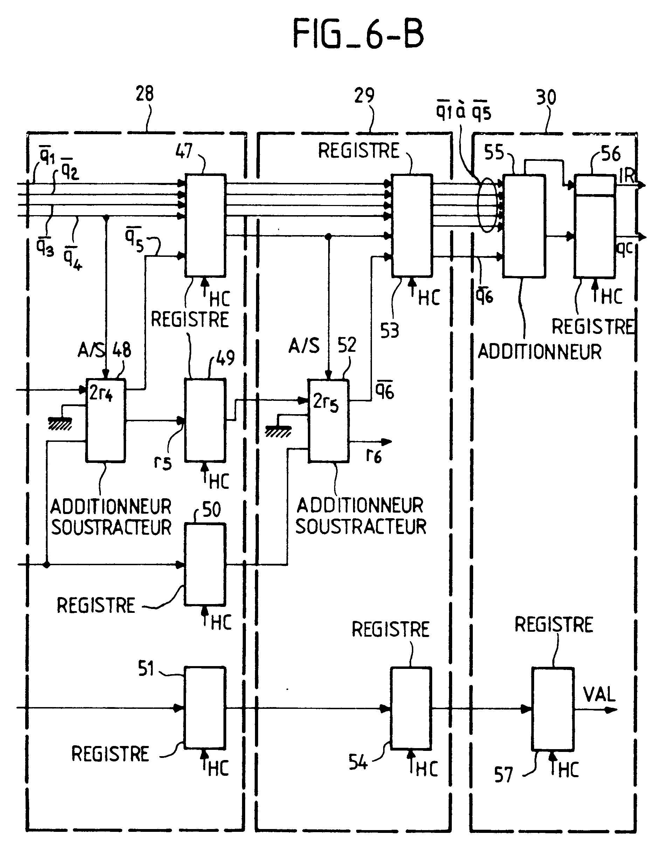

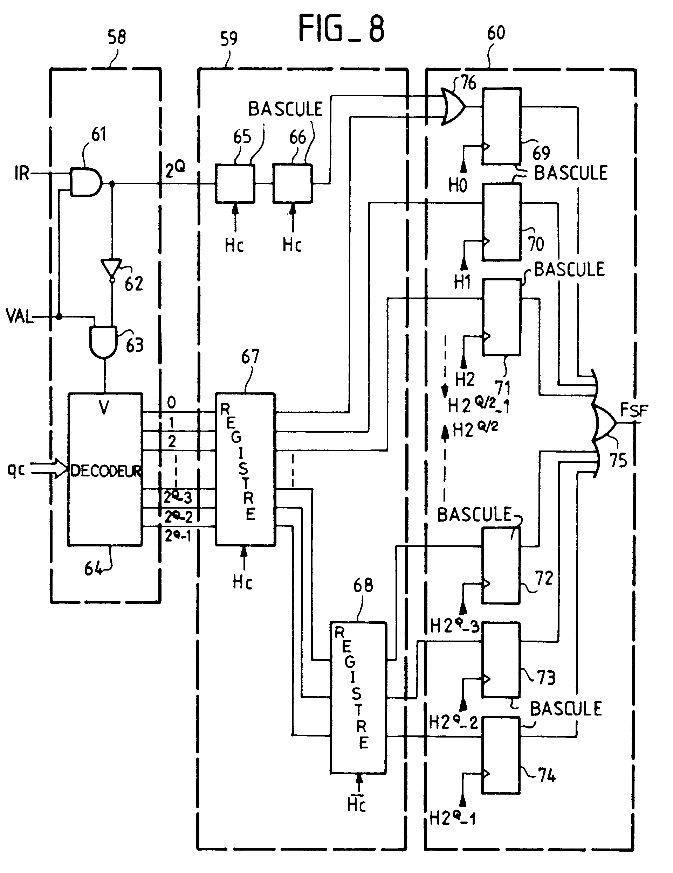

Les détails de réalisation du circuit de calcul fin de la phase sont représentés aux figures 6A et 6B. Ce circuit comprend, représentés à l'intérieur de lignes en pointillés, des blocs de calcul référencés de 23 à 30. Il correspond à une réalisation permettant d'effectuer des calculs sur des longueurs de 8 bits. Sa fonction est de transformer l'erreur de phase $P_{KM}$ en une erreur de temps en tenant compte de la fréquence du signal à synthétiser. Il assure au dispositif de l'invention la caractéristique très importante d'apériodicité requise pour réduire la gigue de phase du signal de sortie. Enfin il peut décoder l'erreur de temps obtenu sous la forme d'une adresse de commande du circuit de sélection de phase d'horloge 3.

La transformation de l'erreur de phase $P_{KM}$ en erreur de temps est effectuée en calculant le rapport de l'erreur de phase $P_{KM}$ à l'incrément de phase $\Delta P_{KM}$ par unité de temps défini ici par la période $T_c$ de l'horloge de calcul. On obtient ainsi une erreur de phase $P_{KM}$ qui est transformée en une erreur temporelle $\Delta t_{KM}$ telle que :

$$\Delta t_{KM} = (P_{KM}/\Delta P_{KM}).T_c$$

En partageant l'unité de temps $T_c$ en $2^Q$ parties égales, l'erreur temporelle est représentée au mieux par l'abscisse $q_E = arrondi((P_{KM}/\Delta P_{KM}).2^Q)$

A titre d'exemple numérique si Q = 5, $P_{KM}$ = 2 et $\Delta P_{KM}$ = 3 la meilleure abscisse $q_E$ représentant l'erreur temporelle est :

$$q_E = arrondi((2/3).32) = 21$$

Lorsque $P_{KM}$ = 0, l'abscisse est nulle il n'y a pas d'erreur et la position temporelle de l'information $R_{KM}$ se confond avec la position idéale du signal recherché.

Le signal réel étant en retard par rapport au signal idéal il faut donc faire une correction temporelle équivalente à une abscisse de -11. Comme ceci n'est pas réalisable physiquement (temps négatif) un retard supplémentaire calibré égal à $T_c$ est introduit. Comme $T_c$ est équivalent à $2^Q$, et vaut 32 dans le présent exemple, on est conduit à effectuer une correction d'abscisse égale à :

$$q_c = 2^Q - q_E = 2^Q - arrondi((P_{KM}/\Delta P_{KM}.2^Q))$$

soit dans l'exemple $Q_c$ = 32 - 21 = 11.

L'erreur de temps $\Delta t_{KM}$ résulte dans ces conditions de la division de deux nombres binaires positifs, le dividende étant l'erreur de phase $P_{KM}$ et le diviseur étant l'incrément $\Delta P_{KM}$ avec :

$$0 \leq P_{KM} < \Delta P_{KM}$$

Cette division peut être effectuée en appliquant les algorithmes connus de division, dont certains peuvent être trouvés par exemple dans l'ouvrage de Y.CHU intitulé "Digital computer design fundamentals" publié chez Mc Graw-Hill.

Le nombre de bits que doit posséder le quotient est égal à Q + 1 pour permettre de réaliser l'arrondi. Le quotient est ensuite multiplié par une puissance de 2 en décalant simplement, par une opération de décalage à gauche, les Q bits dans un registre à décalage. Pour effectuer l'arrondi, on prend la valeur des Q bits située à gauche de la virgule et on y ajoute le bit restant à droite de celle-ci. Si ce bit vaut 0 la valeur décimale est comprise entre x,0 et x,499 et l'arrondi est x. Si ce bit vaut 1 la valeur décimale est comprise entre x,5 et x,999 et l'arrondi est x + 1.

En désignant respectivement par Y et X le diviseur et le dividende, la division peut être effectuée en additionnant ou soustrayant le diviseur Y au reste partiel $r_i$ selon les signes du diviseur et du reste partiel. Si les deux signes sont identiques une soustraction est exécutée et le bit du quotient est égal à 1. Cette soustraction peut aussi être remplacée par une addition du complément à 2 du diviseur. Par contre si les signes du diviseur et du reste partiel sont différents, une addition est exécutée et le bit du quotient est égal à 0. Dans tous les cas, un nouveau reste partiel est déterminé par décalage à gauche de 1 bit et le processus continue jusqu'à ce que le nombre voulu de bits du quotient soit obtenu. Dans le cas présent, comme le diviseur est toujours positif, le bit de signe du reste partiel se trouve être le complément du bit du quotient. Par définition, le reste initial $r_0$ est le dividende X et le premier reste partiel s'écrit :

$$r_1 = 2r_0 - Y$$

Si les signes de $r_1$ et Y sont identiques le premier bit $q_1$ du quotient est égal à 1 et une soustraction est effectuée ; dans le cas inverse le bit du quotient est nul et une addition est effectuée.

Le deuxième reste partiel s'écrit alors :

$$r_2 = 2r_1 + (1-2q_1).Y$$

Le processus se répète ainsi jusqu'à obtenir les Q + 1 bits du quotient.

En prenant pour exemple numérique de calcul une valeur $P_{KM}$ = 1901 et une valeur $\Delta P_{KM}$ = 2135, où $P_{KM}$ et $\Delta P_{KM}$ représentent respectivement le dividende et le diviseur, et en prenant Q = 5 il vient $q_E$ = 28 (valeur non arrondie 28,493).

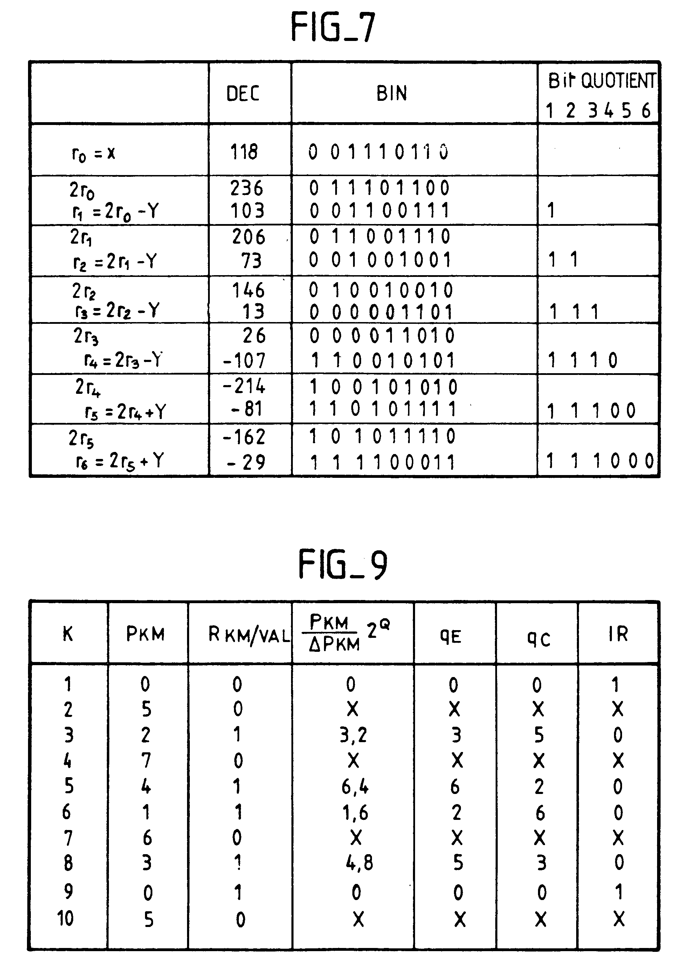

Dans ce cas le calcul du quotient est effectué sur 6 bits et pour obtenir une précision suffisante deux bits supplémentaires sont employés pour définir le diviseur et le dividende. Le tableau représenté à la figure 7 représente la succession des opérations ; en binaire 2135 s'écrit sur 12 bits 100001010111 et par conséquent Y s'écrit sur 8 bits Y = 0.10000101 ce qui représente 133 en décimal et -Y = 1.01111011

de même 1901 s'écrit 011101101101

d'où X = 0.01110110 ce qui représente 118 en décimal.

Dans la représentation binaire des nombres X et Y, le bit situé à gauche du point correspond au bit de signe. On constate sur le tableau de la figure 7 que le bit 6 du quotient est égal à 0 en fin de calcul et que la valeur arrondie $q_E$ du quotient est égale à 28.

L'exemple précédent montre que pour obtenir un quotient de 6 bits le nombre d'opérations répétitives, décalages à gauche, soustractions ou additions, mise en mémoire, du bit de quotient est de 6 et qu'au mieux ceci peut se faire en 6 périodes d'horloge. Cependant la nécessité du calcul de la valeur de correction d'abscisse $q_c$ peut apparaître fréquemment, par exemple toutes les deux périodes d'horloge $T_c$ lorsqu'il s'agit de synthétiser une horloge de fréquence moitié de celle de calcul, auquel cas, on pourra choisir une structure de type pipe-line pour le circuit diviseur comportant autant d'étages qu'il y a de bits à calculer ceux-ci fonctionnant tous à la même horloge de calcul $H_c$. Le mode de réalisation représenté aux figures 6A et 6B fonctionne suivant ce principe, il fournit à partir de données $P_{KM}$ , $\Delta P_{KM}$ et $R_{KM}$ la correction d'abscisse $q_c$ validée par le signal $R_{KM}$.

Le bloc 23 permet d'ajuster le format des données $P_{KM}$ et $\Delta P_{KM}$ à la capacité du diviseur de façon à obtenir soit toujours la même précision maximale quelle que soit la valeur de $\Delta P_{KM}$. Il comprend pour cela deux circuits décaleurs de bits 31 et 32, réalisé en technique ECL du type connu par exemple sous la référence 100158 du constructeur FAIRCHILD, sur les entrées desquels sont appliquées respectivement l'erreur de phase $P_{KM}$ et l'incrément de phase $\Delta P_{KM}$. L'amplitude du décalage est commandée par un codeur 33 d'informations de décalage, adressé par l'incrément de phase $\Delta P_{KM}$. Les circuits décaleurs 31 et 32 sont constitués par des circuits logiques combinatoires qui comportent un jeu de portes commandées par des instructions fournies par le codeur 33 permettant de décaler à gauche un mot quelconque d'un nombre déterminé de bits. L'information de décalage est donnée par la position du bit le plus significatif du mot $\Delta P_{KM}$. Si l'incrément de phase $\Delta P_{KM}$ comporte M bits au maximum et que l'amplitude de ses variations couvre un rapport de $2^4$ soit 4 octaves, vers les valeurs inférieures, le décalage simultané des informations en $\Delta P_{KM}$ et $P_{KM}$ variera de 0 à 4 bits vers la gauche.

Pour éliminer les dispersions sur les temps de propagation et assurer la cohérence temporelle des trois informations $\Delta P_{KM}$, $P_{KM}$, $R_{KM}$, un échantillonnage par l'horloge de calcul $H_c$ est effectué après chaque opération arithmétique sur l'ensemble de ces trois informations, à l'intérieur de chaque bloc 23 à 30.

En sortie du bloc 23, les informations $P_{KM}$ et $\Delta P_{KM}$ sont respectivement transformées par les circuits décaleurs 31 et 32 en deux informations $r_0$ et Y. Les blocs 24 à 29 représentés constituent le diviseur pipe-line proprement dit et fonctionnent conformément à l'algorithme décrit précédemment. Le bloc 24 constitue le bloc de division initial. Le premier élément arithmétique est constitué par un circuit soustracteur 37 qui reçoit sur son entrée ' + ' le terme $r_0$ décalé de un bit à gauche, c'est-à-dire multiplié par 2 et noté $2r_0$ sur les figures 6A et 6B et il reçoit sur l'entrée '-' le terme Y. Il est à noter cependant que la soustraction qui est effectuée à ce niveau peut être remplacée par une addition en prenant le complément à 1 du terme soustractif et en ajoutant 1 sur l'entrée de report de retenue d'un additionneur. La sortie de signe du circuit soustracteur 37 est le complément du premier bit du quotient noté $\overline{q_1}$ et la mantisse est $r_1$. Ces deux grandeurs étant respectivement prises en compte à l'intérieur des registres 38 et 39. Des registres 40 et 41 permettent de mémoriser respectivement l'information Y et l'information $R_{KM}$ provenant des registres 35 et 36.

Les blocs 25 à 28 sont les blocs de division intermédiaires qui permettent d'obtenir successivement les bits du quotients $\overline{q_2}$ à $\overline{q_5}$, la taille du registre de mémorisation de chaque quotient intermédiaire augmentant d'une unité à chaque bloc de façon à s'adapter au nombre de digits du quotient calculé. La commande d'addition ou de soustraction de l'élément arithmétique d'un bloc notée A/S sur les figures 6A et 6B est donnée par la sortie résultant du calcul précédent, puisque l'information Y est toujours positive. Si le signe d'un reste partiel $r_n$ est positif alors le bit $\overline{q_n}$ correspondant = 0 et l'opération est une addition ; dans le cas contraire si le signe $r_n$ est négatif alors $\overline{q_n}$ = 1 et l'opération est une soustraction. Sur les figures 6A et 6B les blocs 25 et 26, 27 et 28 sont composés d'éléments identiques, les éléments 42 à 46 du bloc 25 étant respectivement équivalents aux éléments 47 à 51 du bloc 28, ces éléments étant eux-mêmes respectivement équivalents aux éléments 37 à 41 du bloc 24.

Le bloc 29 constitue le bloc de division final. Ce bloc est simplifié par rapport au bloc précédent par la suppression du registre de mémorisation du reste et de celui de mémorisation de la valeur Y puisque la division est terminée. Enfin le bloc 30 comprend un circuit additionneur 55 couplé en sortie à un registre 56 et un registre 57 couplé au registre 54 du bloc 29. Le bloc 30 effectue le traitement de l'arrondi du quotient et fournit la valeur $q_c$ de la correction d'abscisse. La valeur de la correction d'abscisse $q_c$ est obtenue en ajoutant dans l'additionneur 55 le dernier bit $\overline{q_6}$ (le moins significatif) au mot binaire constitué des bits $\overline{q_1}$ à $\overline{q_5}$ où $\overline{q_1}$ est le bit le plus significatif.

Comme cela a été défini précédemment la valeur $q_c$ est égale à $2^Q$-$q_E$. Si les bits $\overline{q_1}$ à $\overline{q_6}$ valent 0, alors $q_c$ vaut 0 et il n'y a aucune correction à effectuer puisque l'erreur $q_E$ est maximale et vaut $2^Q$. Dans un autre cas si tous les bits $\overline{q_1}$ à $\overline{q_6}$ valent 1, alors $q_c$ vaut encore 0, mais à la différence du cas précédent l'erreur $q_E$ est nulle et $q_c$ doit alors être considéré comme prenant la valeur $2^Q$.

La valeur $2^Q$ de correction est obtenue en introduisant un retard supplémentaire égal à $T_c$ dans le circuit de sélection de phase d'horloge. La retenue fournie par le circuit additionneur 55 sert dans ces conditions d'indicateur IR lorsque $q_c$ vaut $2^Q$ ; IR étant un bit de poids $2^Q$+1. Enfin le registre 57 fournit un signal de validation du calcul VAL qui n'est autre qu'un indicateur de dépassement $R_{KM}$ différé d'autant de fois qu'il y a d'opérations synchrones effectuées pour obtenir la valeur $q_c$ sur les figures 6A et 6B ce qui dans l'exemple est égal à 8 fois.

Le circuit de sélection de la phase d'horloge est représenté à la figure 8 comprend trois blocs référencés respectivement 58, 59 et 60 à l'intérieur de lignes en pointillés. Le bloc 58 comprend un ensemble de portes logiques 61 à 63 et un circuit de décodage 64 du signal codé binaire $q_c$ calculé précédemment.

Le bloc 59 se compose des registres 65, 66, 67 et du registre 68. Enfin le bloc 60 comprend un ensemble de $2^Q$ bascules, seules les bascules référencés de 69 à 74 étant représentés. Ces bascules sont reliées par leurs sorties à une porte OU 75. L'entrée de la bascule 69 est commandée au travers d'une porte OU 76 à deux entrées, une première entrée de la porte OU 76 étant reliée à la sortie de la bascule 66 et une deuxième entrée de la porte OU 76 étant reliée à la sortie du registre 67 qui correspond à la valeur décimale zéro du terme $q_c$.

Le fonctionnement du circuit de sélection de la phase d'horloge est le suivant. Le terme codé binaire $q_c$ (abscisse de correction) est décodé par le décodeur 64 en un parmi $2^Q$. Les $2^Q$ lignes distinctes servent d'adresse de sélection de phase d'horloge et ces adresses sont validées uniquement lorsque le signal VAL fourni par le registre 57 du bloc 30 des figures 6A et 6B est présent sur une première entrée de la porte ET 63. Chaque adresse est présente pendant une durée égale à une période d'horloge $H_c$ elle est lue au moyen de $2^Q$ bascules type "D", seules les bascules 69 à 74 étant représentées à l'intérieur du bloc 60, elles sont commandées par l'horloge déphasée correspondant à cette adresse. Les sorties des bascules 69 à 74 sont appliquées aux entrées correspondantes de la porte OU 75 qui réalise le regroupement sur une même ligne de tous les signaux. Le signal obtenu en résultat sur la sortie de la porte OU 75 est le signal d'horloge synthétisé à définition fine de période $T_{SF}$.

Une illustration du fonctionnement du circuit de sélection dans un cas précis d'utilisation est explicité ci-après à l'aide du tableau de la figure 9. On a supposé dans cet exemple que l'accumulateur a une capacité M = 8, que l'incrément de phase $\Delta P$ = 5 et qu'aucune modulation de phase ou de fréquence est appliquée au dispositif. Les résultats sont ceux que l'on obtient avec une valeur Q = 3. La croix X indique que l'on ne tient pas compte des calculs lorsque le signal VAL = 0. Dans ce tableau cinq dépassements $R_{KM}$ par cycle de huit périodes d'horloge de calcul sont obtenus. Ces dépassements représentent grossièrement l'horloge synthétisée par l'accumulateur de phase seul et sa période $T_{SG}$ vautsoit $T_c$ soit deux fois $T_c$ ce qui est assez imprécis, alors que l'horloge idéale devrait faire 8 $T_c$/5 soit 1,6 $T_c$.

Les données $q_C$, IR et VAL sont celles qui sont fournies au circuit de sélection décrit précédemment à la figure 8. Dans le bloc 58 le signal codé binaire $q_c$ qui représente l'abscisse de correction, est décodé par le décodeur 64 en $2^Q$ informations distinctes fournies sur $2^Q$ connexions. Comme le circuit diviseur fonctionne en permanence dans le circuit de calcul fin, les seules opérations valables sont celles qui sont effectuées lorsque les signaux $R_{KM}$ ou VAL sont au niveau 1. Le signal VAL permet de valider, d'une part, le décodage de $q_c$ et d'autre part, l'information de retenue IR fournie par le registre 56 du bloc 30 des figures 6A et 6B. Si les signaux IR et VAL ont pour valeur 1, alors $q_c$ vaut nécessairement 0 et pour qu'il n'y ait pas de confusion entre l'état 0 et l'état $2^Q$, le décodeur 64 est invalidé par l'action de la porte 63. Le bloc 58 fournit une sortie sur $2^Q + 1$ fils d'adresses numérotées de 0 à $2^Q$. Le bloc 59 permet d'obtenir les retards convenables sur les signaux d'adresse afin que la sélection correcte des phases d'horloge s'effectue dans le bloc 60.

Un premier registre 67 permet de synchroniser les sorties du décodeur par le signal d'horloge $H_c$. Les sorties du registre 67 sont partagées en deux groupes de tailles identiques, l'un comprenant les adresses numérotées de 0 à $2^{Q/2}-1$ est appliqué directement sur les Q/2 premières bascules du bloc 60, l'autre, comprenant les adresses $2^{Q/2}$ à $2^Q-1$, est d'abord différé d'un demi temps d'horloge de calcul $T_c$ au moyen du registre 68 qui est commandé par l'horloge complémentaire au signal d'horloge $H_c$ avant d'être appliqué sur les Q/2 dernières bascules du bloc 60.

En ce qui concerne l'adresse $2^Q$, une fois que celle-ci est synchronisée par le signal d'horloge $H_c$ au moyen de la bascule 65, celle-ci est différée par la bascule 66 d'un temps d'horloge $T_c$ pour la raison déjà indiquée dans la description du circuit de calcul fin.

Les bascules 69 à 74 forment $2^Q$ bascules identiques recevant chacune une horloge

$$H_0 \text{ à } H_{2^Q - 1}).$$

Ces $2^Q$ horloges sont déphasées entre elles de $2\pi/2^Q$rad et sont fournies par le générateur d'horloges 4 de la figure 3. Les entrées de ces bascules reçoivent les adresses qui sont présentes pendant une période de calcul $T_c$. Par exemple, si l'adresse 2 existe, alors, son échantillonnage par l'horloge $H_2$ donnera en sortie de la bascule 71 un seul créneau positif de durée $T_c$ mais de phase correspondant à celle de l'horloge $H_2$. Les sorties des bascules 69 à 74 sont appliquées sur les entrées correspondantes du circuit OU 75 à $2^Q$ entrées de façon à obtenir un train de créneaux successifs assez regulièrement espacés qui constituent le signal d'horloge à faible gigue recherché et de période $T_{SF}$.

En ce qui concerne la bascule 69 qui reçoit le signal d'horloge $H_0$, l'information appliquée à son entrée est, selon le résultat du calcul fin, soit l'adresse 0 fournie par le décodeur 64, soit l'adresse $2^Q$ fournie par l'information IR. Ces deux signaux ne pouvant exister simultanément, la porte OU 76 assure l'interface entre ceux-ci et l'entrée de la bascule 69.

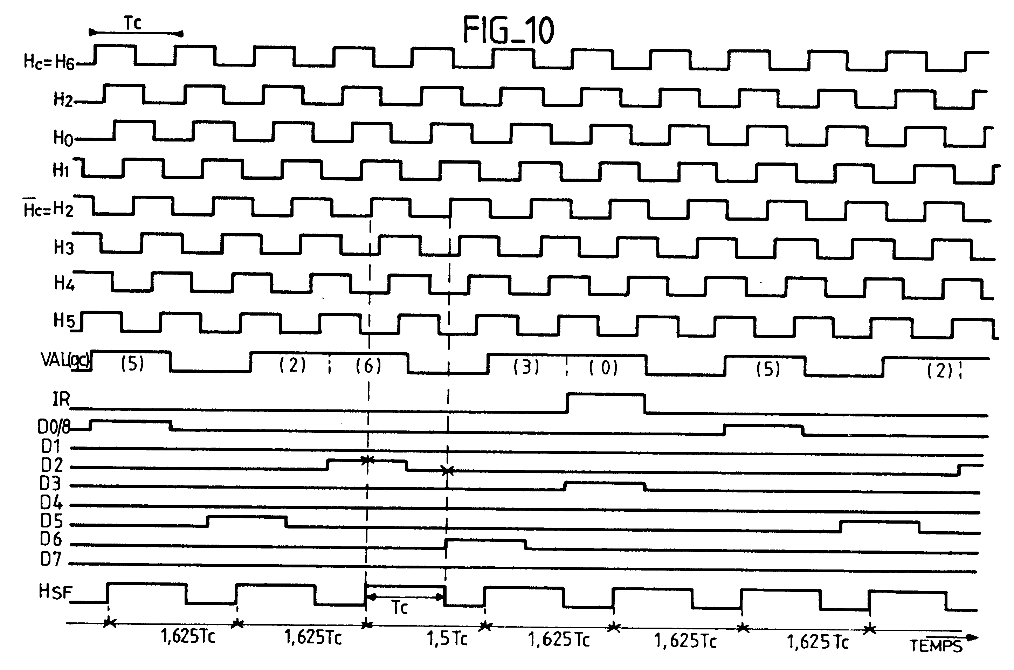

Le chronogramme de la figure 10 montre comment est synthétisé le signal d'horloge à faible gigue $H_{SF}$ à l'aide des circuits décrits précédemment. Conformément à l'exemple numérique précité on trouve sur la figure 10, tout d'abord, les huit phases d'horloge numérotées de $H_0$ à $H_7$ décalées de $\pi/4$ et de période $T_c$, puis les signaux VAL et IR qui apparaissent selon la séquence du tableau de la figure 9, les valeurs correspondantes de $q_c$ étant entre parenthèses, puis huit lignes suivantes correspondant aux entrées $D_0$ à $D_7$ des huit bascules d'échantillonnage des circuits de sélection, c'est-à-dire celles qui représentent les adresses décodées et retardées des durées précédemment indiquées et enfin, la dernière ligne représentent l'horloge synthétisée qui est la succession d'échantillonnages en cours du temps des différentes adresses. Les horloges $H_c$ et $\overline{H_c}$ sont naturellement deux horloges choisies parmi les $2^Q$ horloges déphasées. La position de ces deux horloges complémentaires est donnée par le fait que l'on recherche à effectuer un échantillonnage d'adresse absolument sans ambiguïté. Pour assurer un fonctionnement correct des bascules, le signal sur l'entrée D de chacune d'elles doit être pré-établi un peu avant le front d'horloge et être encore maintenu encore un peu après celui-ci. Ceci correspond sur la figure 8 au fait que pour les horloges $H_0$ à $H_3$ le signal présent à l'entrée D des bascules correspondantes doit être synchrone de l'horloge $H_6$ et que pour les horloges $H_4$ à $H_7$ le signal sur l'entrée D de la bascule correspondante doit être synchrone avec l'horloge $H_2$, ceci pour permettre au front montant de ces horloges d'être bien à l'intérieur du créneau à échantillonner comme on peut s'en rendre compte sur les chronogrammes de la figure 10 et en particulier pour le signal $D_2$. Pour tenir compte de ces deux cas $H_c = H_6$ et $\overline{H_c} = H_2$.

Dans le cas général pour $2^Q$ horloges déphasées le numéro de l'horloge $H_C$ sera $2\frac{3Q}{4}$ et celui de l'horloge $\overline{H_c}$ sera $2\frac{Q}{4}$

Il résulte de ce qui précède que c'est la résolution en phase des horloges (ou résolution temporelle pour une période d'horloge de calcul donné) qui fixe la gigue de phase du signal synthétisé en sortie du dispositif. Par exemple, pour une horloge de calcul de fréquence 50 MHz et un générateur de 128 phases d'horloge, la résolution temporelle du signal synthétisé est de 20 nanosecondes/128 soit 0,16 nanosecondes. Le gain de traitement obtenu par rapport à un signal synthétisé uniquement par l'horloge de calcul (définition grosse) est alors de 6Q décibels soit 42 décibels. Ce gain de traitement a la caractéristique d'être apériodique, que la fréquence synthétisée soit égale au $5^{\text{ème}}$ ou au $100^{\text{ème}}$ de la fréquence d'horloge. Ceci est naturellement vrai dans la mesure où le décaleur de bit existant dans le dispositif de calcul fin de la phase possède la dynamique suffisante. Cependant, des fluctuations du gain de traitement peuvent apparaître si l'écart temporel entre deux horloges de rangs successifs n'est pas obtenu avec une précision suffisante. L'un des moyens pour obtenir des horloges également espacées est d'utiliser un registre à décalage constitué de $2^Q/2$ bascules en cascade, la sortie inversée de la dernière bascule étant connectée à l'entrée de la première l'ensemble des bascules étant commandées par la même horloge de référence $H_R$. On obtient ainsi un diviseur de fréquence du type JOHNSON, encore appelé diviseur en anneau dont le rang de division est de $2^Q$. L'horloge $H_R$ doit être dans ce cas $2^Q$ fois plus élevée que l'horloge de calcul $H_c$. A titre d'exemple, si l'horloge de calcul $H_c$ possède une fréquence de 50 MHz et si $Q = 7$, l'horloge de référence $H_R$ devra être fixée à une fréquence de 6,4 GHz.

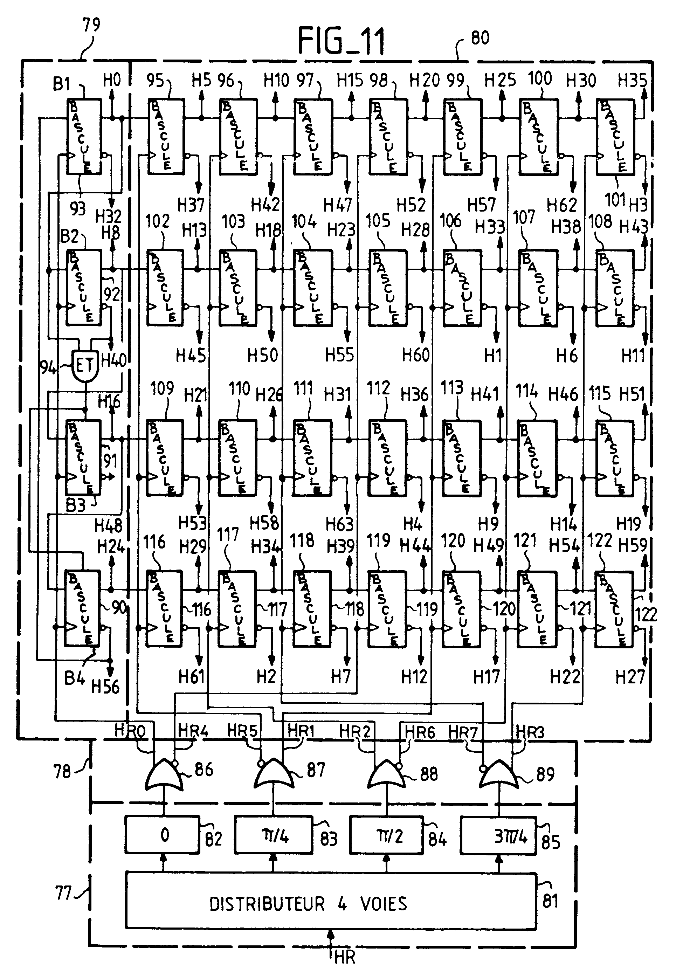

Le circuit générateur d'horloges déphasées représenté à la figure 11 permet d'éviter cet écueil. Ce circuit a pour but d'élaborer et de fournir $2^Q$ horloges toutes de périodes $T_c$, celles-ci étant déphasées entre elles de la quantité $2\pi/2^Q$. Il se compose des blocs 77 à 80, ceux-ci comportant des éléments numérotés de 81 à 122. Suivant cette représentation une source, de fréquence stable de valeur $F_R = 2^B$ fois la fréquence de l'horloge de calcul, alimente un dispositif passif 77 permettant d'obtenir C signaux déphasés de $\pi/C$ rad où C est égal à $2^{Q-B}/2$. Les C signaux obtenus sont appliqués sur un circuit de portes symétriques OU/NON.OU pour obtenir 2C signaux déphasés de $\pi/C$ rad dans l'intervalle 0 à $2\pi$ et numérotés de $H_{R0}$ à $H_{R(2C-1)}$. Un de ces signaux sert d'horloge à un diviseur en anneau 79 de rang $2^B$ qui fournit sur ses $2^B$ sorties des signaux déphasés de $2\pi/2^B$rad, de même fréquence que celle de l'horloge $H_c$. Le diviseur en anneau 79 sert de maître à $2^B/2$ registres à décalage appelés esclaves comportant chacun $(2^{Q-B}-1)$ étages et dont les horloges appliquées à chacun de ces étages sont fournies par les (2C-1) signaux restants obtenus en sorties des portes du bloc 78 et utilisés dans un ordre tel que les temps de préétablissement et de maintien nécessaires au signal sur l'entrée de chaque bascule vis-à-vis de l'horloge considérée soient respectés. Par registre il est ainsi créé $2(2^{Q-B}-1)$ signaux supplémentaires déphasés ; l'ensemble des signaux déphasés obtenus dans le compteur et les registres étant égal à :

$$2^B + (2^B/2).2(2^{Q-B}-1) = 2^Q$$

Les registres esclaves sont représentés à l'intérieur du rectangle en pointillés 80. Le terme maître utilisé pour qualifier le diviseur en anneau 79 indique que c'est le diviseur en anneau qui impose sa forme d'onde carrée aux registres à décalage esclaves que ceux-ci recopient et décalent dans le temps.

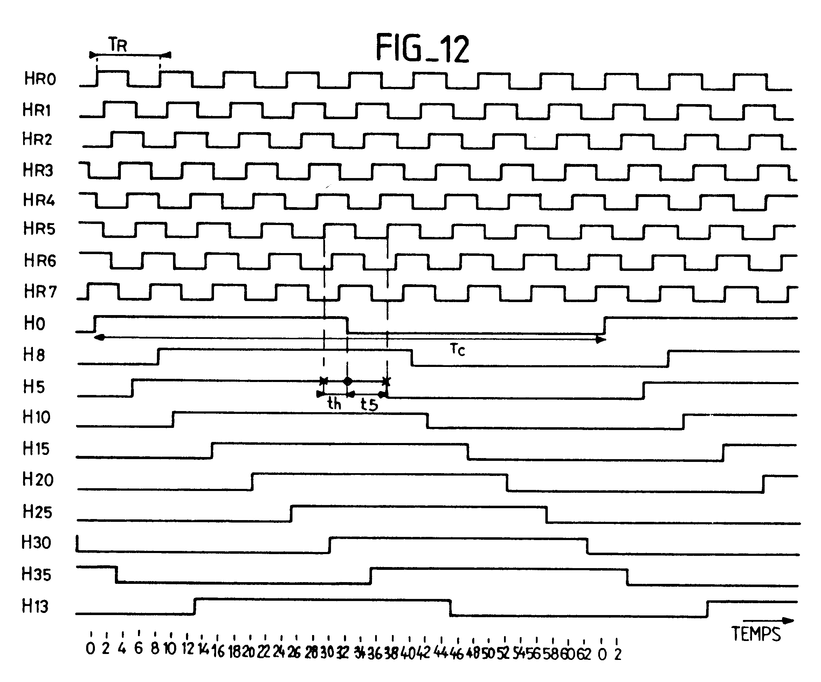

Le déphasage élémentaire entre ces signaux est égal à celui donné par le dispositif passif de déphasage $\pi/C$ divisé par le rang de division $2^B$ ce qui donne $2\pi/2^Q$. L'exemple représenté à la figure 11 ainsi que les chronogrammes afférant à la figure 12 concernent un générateur de 64 phases d'horloge, $(Q = 6)$. A titre d'exemple, ce générateur pouvant fonctionner sur une fréquence d'horloge $H_c$ de 50 MHz, $H_R$ étant égal à 400 MHz et B étant égal à 3. Dans ces conditions le bloc 77 fournit à partir du signal $H_R$ quatre signaux déphasés de $\pi/4$ à l'aide par exemple de quatre lignes à retard ou à l'aide, comme cela est représenté sur la figure 11 d'un répartiteur à quatre voies 81 suivies de quatre lignes à retard 82, 83, 84 et 85 de longueurs différentes permettent d'obtenir les déphasages requis. On obtient dans ces conditions des retards égaux à 0 ; 0,31 , 0,63 et 0,94 nanosecondes.

Le bloc 78 qui est formé des portes OU/NON-OU 86, 87, 88 et 89 fournit, en plus des signaux précédents, les signaux correspondants en opposition de phase et on obtient ainsi les horloges numérotées $H_{R0}$ à $H_{R7}$ représentées sur les huit premières lignes du chronogramme de la figure 12.

Le bloc 79 est formé par un diviseur en anneau par 8, comprenant quatre bascules en cascade référencées de 90 à 93, la sortie inversée de la bascule 90 étant rebouclée sur l'entrée de la bascule 93. Un tel diviseur possède deux modes de fonctionnement, un mode normal qui permet d'obtenir le signal carré recherché (division par 8) et un mode parasite. Pour éliminer ce dernier, une porte ET 94 à deux entrées reliées respectivement à la sortie normale de la bascule 93 et à la sortie complémentée de la bascule 92 remet à zéro les bascules 91 et 90. Le signal $H_0$ qui est synchrone avec l'horloge $H_{R0}$ est représenté sur la ligne 9 du chronogramme de la figure 12. Les autres signaux de sortie du diviseur se déduisent du signal $H_0$ par des décalages successifs de un temps d'horloge $T_R$ comme représenté par exemple par le signal $H_8$ issu de la bascule 92. La période des signaux $H_0$ et $H_8$ est égale à $T_c$. Le bloc 80 représente le réseau de bascules arrangées sous forme matricielle et permettant d'obtenir les 56 autres phases. Ce réseau est formé de quatre registres à décalage, un premier registre à décalage étant constitué par les bascules 95 à 101, un deuxième registre à décalage étant constitué par les bascules référencées de 102 à 108, un troisième registre à décalage étant constitué par les bascules référencées de 109 à 115 et un quatrième registre à décalage étant constitué par les bascules référencées de 116 à 122. Chacun de ces registres reçoit respectivement sur ses bascules d'entrée, formées par les bascules 95, 102, 109 et 116, les signaux fournis par les sorties des bascules 93, 92, 91 et 90 du diviseur en anneau 79. Les sept colonnes du réseau de bascules sont commandés par les signaux d'horloge $H_{R5}$, $H_{R2}$, $H_{R7}$, $H_{R4}$, $H_{R1}$, $H_{R6}$ et $H_{R3}$. La figure 12 représente les échantillonnages successifs du signal $H_0$ venant de la bascule 93 par les signaux d'horloges précités, d'où il résulte les signaux des horloges $H_5$, $H_{10}$, $H_{15}$, $H_{20}$, $H_{25}$, $H_{30}$ et $H_{35}$. Les conditions d'échantillonnage du signal $H_0$ par l'horloge $H_{R5}$ sont indiquées sur la ligne représentant le signal $H_5$. Celles-ci sont d'une part, le temps de maintien $t_H$ et de l'information $H_0$ après échantillonnage par $H_{R5}$ et d'autre part, le temps de préétablissement $t_S$ de l'information $H_0$ avant échantillonnage par $H_{R5}$.

Ces temps sont respectivement ici de 0,94 nanosecondes et 1,56 nanosecondes. Ces temps sont compatibles avec les technologies ECL 100K développées actuellement. Naturellement des considérations technologiques peuvent encore déterminer l'ordre d'agencement des horloges sur les registres à décalage et ceci pourra être optimisé lors du routage des horloges, en fonction du nombre des phases nécessaires à chaque cas particulier d'utilisation du dispositif de l'invention. Le dernier chronogramme de la figure 12 représente l'évolution de l'horloge $H_{13}$ obtenue par échantillonnage du signal $H_8$ par l'horloge $H_{R5}$. De la même façon que précédemment ceci est effectué en créant successivement les horloges $H_{18}$, $H_{23}$, $H_{28}$ etc...

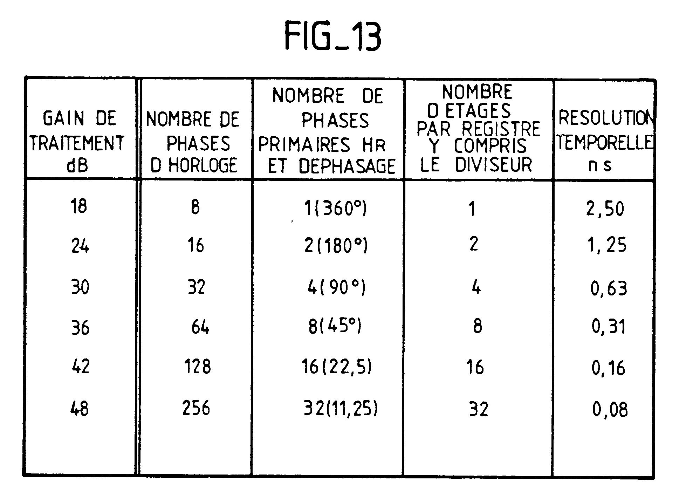

La dernière ligne de la figure 12 indique la position au cours du temps du front montant des 64 phases d'horloge $H_0$ à $H_{63}$ couvrant une période $T_c$. Enfin le tableau représenté à la figure 13 montre quelques paramètres caractéristiques du montage en fonction du gain de traitement dans le cas où le diviseur en anneau divise par huit une fréquence de référence de 400 MHz, le nombre de registres étant égal à 4.

Naturellement les principes précédents peuvent être généralisés à des réalisations portant sur des longueurs de bits plus ou moins grandes pour obtenir des horloges plus ou moins importantes en fonction des besoins dictés par les cahiers des charges. Comme l'invention se prête très bien à des réalisations modulaires, ces extensions n'offrent aucune difficulté.

## Revendications

1. Procédé de synthèse numérique d'un signal d'horloge, du type dans lequel le signal d'horloge à synthétiser est obtenu à partir d'une donnée incrémentale de phase ΔP représentative de la fréquence à synthétiser qui consiste à effectuer à chaque période $T_c$ d'un signal d'horloge de calcul l'addition (6) modulo un nombre binaire M de chaque incrément de phase à la somme modulo M des incréments de phase déjà totalisés à l'intérieur d'un dispositif accumulateur de phase de capacité égale au nombre binaire M, et à générer un signal du dépassement de capacité $R_{KM}$ caractérisé par les étapes de lire (7) après chaque dépassement de capacité du dispositif accumulateur (6) l'erreur de phase résiduelle $P_K$ restante contenue dans le dispositif accumulateur, générer (4, 80) $2^Q$ signaux d'horloge de période $T_c$ déphasés entre eux de $T_c/2^Q$, Q étant un nombre entier positif non nul prédéfini, calculer après chaque dépassement, (2, 23 ... 30) l'erreur temporelle $\Delta t_K$, en effectuant le rapport

$$\frac{\dot{P}_K}{\Delta P}$$

entre l'erreur de phase résiduelle $P_K$ et l'incrément de phase ΔP par période $T_c$ et à sélectionner (3, 58 ... 60) en fonction de l'erreur temporelle $\Delta t_K$ calculée le signal d'horloge dont le déphasage par rapport à l'horloge de calcul est le plus proche de la phase résiduelle lue, afin de générer, sous le contrôle dudit signal de dépassement de capacité $R_{KM}$, le signal d'horloge ($F_{SF}$) à synthétiser.

2. Procédé selon la revendication 1, caractérisé en ce que le déphasage le plus proche ($q_c$) de la phase résiduelle calculée est déterminée à partir d'une valeur arrondie $q_E$ de l'erreur temporelle $\Delta t_K$ en retardant cette valeur d'une valeur $2^Q$ représentant la période $T_c$ de l'horloge de calcul.

3. Procédé selon les revendications 1 et 2 caractérisé en ce que le rapport entre l'erreur de phase résiduelle $P_K$ et l'incrément de phase ΔP est calculé par un circuit diviseur numérique du type 'pipe line' (24 ... 30) dont les étages travaillent au rythme du signal d'horloge de calcul $T_c$.

4. Procédé selon l'une quelconque des revendications 1 à 3 caractérisé en ce que l'incrément de phase est modulé par un incrément représentatif d'une modulation de fréquence.

5. Procédé selon l'une quelconque des revendications 1 à 4 caractérisé en ce qu'un incrément de phase représentatif d'une modulation de phase est ajouté au contenu du dispositif accumulateur.

6. Procédé selon l'une quelconque des revendications 1 à 5 caractérisé en ce que chaque dépassement $R_{KM}$ de capacité du dispositif accumulateur (6) est signalé par le signe de la différence (22) entre deux valeurs successives de l'erreur de phase résiduelle $P_K$.

7. Procédé selon l'une quelconque des revendications 1 à 6 caractérisé en ce qu'en modulation de phase la valeur de l'incrément de phase $\Delta P$ est obtenue à chaque instant de l'horloge de calcul par addition (16) de la valeur la plus récente de l'erreur de phase résiduelle à la donnée incrémentale de phase $\Delta P$ et par soustraction (18) du résultat obtenu à la valeur antérieure de l'erreur de phase résiduelle obtenue à l'instant de l'horloge de calcul précédant l'instant de calcul courant.

8. Dispositif de synthèse numérique d'un signal d'horloge, du type dans lequel le signal d'horloge à synthétiser est obtenu à partir d'une donnée incrémentale de phase $\Delta P$ représentative de la fréquence à synthétiser caractérisé en ce qu'il comprend, un générateur (4) de $2^Q$ signaux d'horloge de période $T_c$ régulièrement espacés dans le temps, deux signaux consécutifs étant déphasés l'un par rapport à l'autre d'une quantité

$$\frac{T_c}{2^Q},$$

un premier circuit (1) de calcul gros de la période du signal à synthétiser et de détermination de l'erreur de phase résiduelle $P_K$, comprenant un accumulateur de phase (6) pour totaliser les incréments de phase successifs à chaque période $T_c$ du signal d'horloge de calcul et un circuit (9) pour fournir un signal indicateur de chaque dépassement de la capacité de l'accumulateur, un deuxième circuit (2) de calcul fin de la phase pour calculer le rapport

$$q_c = \frac{P_k}{\Delta P},$$

$P_K$ étant l'erreur de phase résiduelle restante dans l'accumulateur de phase après chaque dépassement de capacité de celui-ci, comprenant une pluralité de circuits, additionneur, soustracteur, couplés en cascade suivant une structure (37, 42, 48, 52) pipe line pour le calcul de la valeur du déphasage $q_c$ sur une periode $T_c$ et un troisième circuit de sélection (3) de la phase d'horloge couplé au deuxième circuit (2) et au générateur (4) des $2^Q$ signaux d'horloge comprenant un décodeur de phase d'horloge (64) adressé par la valeur du déphasage $q_c$ couplé à un circuit de validation (60) pour sélectionner l'un des $2^Q$ signaux d'horloge correspondant au déphasage $q_c$ calculé pour constituer le signal d'horloge synthétisé de sorte que le signal d'horloge selectionné ait le déphasage par rapport à l'horloge de calcul le plus proche de la phase résiduelle calculée.

9. Dispositif selon la revendication 8 caractérisé en ce que le générateur des $2^Q$ signaux d'horloge comprend un réseau de bascules (95 ... 122) arrangées suivant une forme matricielle, chaque bascule fournissant un signal d'horloge étant au croisement d'une ligne et d'une colonne de l'organisation matricielle, chaque ligne étant couplée à une sortie parmi les $2^B$ sorties d'un diviseur en anneau (79) cadence à une fréquence $F_R = 2^B$ fois la fréquence du signal de l'horloge de calcul et chaque colonne étant couplée à une parmi 2C sorties directes et complémentées d'un déphaseur du signal de fréquence $F_R$.

**Claims**

1. Method for the digital synthesis of a clock signal, of the type in which the clock signal to be synthesised is obtained from an incremental phase datum $\Delta P$ representative of the frequency to be synthesised which consists of carrying out, at each period $T_c$ of a calculating clock signal, addition (6) of modulo binary number M of each phase increment to the modulo M sum of the phase increments already added up within a phase accumulator device having a capacity equal to the binary number M, and generating an overflow signal $R_{KM}$, characterised by the steps of reading (7), after each overflow of the accumulator device (6), the remaining residual phase error $P_K$ contained in the accumulator device, generating (4, 80) $2^Q$ clock signals of period $T_c$ out of phase with each other by $T_c/2^Q$, Q being a predefined non-zero positive integer, calculating after each overflow (2, 23 ... 30) the time error $\Delta t_K$, by finding the ratio

$$\frac{P_K}{\Delta P}$$

between the residual phase error $P_K$ and the phase increment $\Delta P$ per period $T_c$ and selecting (3, 58 ... 60) as a function of the calculated time error $\Delta t_K$ the clock signal of which the phase shift relative to the calculating clock is closest to the residual phase as read, in order to generate, under the control of said overflow signal $R_{KM}$, the clock signal ($F_{SF}$) to be synthesised.

2. Method according to claim 1, characterised in that the phase shift ($q_c$) closest to the calculated residual phase is determined from a rounded value $q_E$ of the time error $\Delta t_K$, retarding this value by a value $2^Q$ representing the calculating clock period $T_c$.

3. Method according to claims 1 and 2, characterised in that the ratio between the residual phase error $P_K$ and the phase increment $\Delta P$ is calculated by a digital divider circuit of the pipeline type (24 ... 30) of which the stages operate in time with the calculating clock signal $T_c$.

4. Method according to any of claims 1 to 3, characterised in that the phase increment is modulated by an increment representative of a frequency modulation.

5. Method according to any of claims 1 to 4, characterised in that a phase increment representative of a phase modulation is added to the content of the accumulator device.

6. Method according to any of claims 1 to 5, characterised in that each overflow $R_{KM}$ of the accumulator device (6) is signalled by the sign of the difference (22) between two successive values of the residual phase error $P_K$.

7. Method according to any of claims 1 to 6, characterised in that in phase modulation the value of the phase increment $\Delta P$ is obtained at each moment of the calculating clock by addition (16) of the most recent value of the residual phase error to the incremental phase datum $\Delta P$ and by subtraction (18) of the result obtained from the previous value of the residual phase error obtained at the moment of the calculating clock preceding the current calculating moment.

8. Device for the digital synthesis of a clock signal, of the type in which the clock signal to be synthesised is obtained from an incremental phase datum $\Delta P$ representative of the frequency to be synthesised, characterised in that it includes a generator (4) of $2^Q$ clock signals of period $T_c$ regularly spaced in time, two consecutive signals being out of phase with each other by a quantity

$$\frac{T_c}{2^Q},$$

a first circuit (1) for rough calculation of the period of the signal to be synthesised and determination of the residual phase error $P_K$, including a phase accumulator (6) for adding up the successive phase increments at each period $T_c$ of the calculating clock signal and a circuit (9) for providing an indicator signal for each overflow of the accumulator, a second circuit (2) for fine phase calculation for calculating the ratio

$$q_c = \frac{P_k}{\Delta P},$$

$P_K$ being the residual phase error remaining in the phase accumulator after each overflow thereof, including a plurality of adder and subtracter circuits coupled in cascade in a pipeline structure (37, 42, 48, 52) for calculating the phase shift value $q_c$ over a period $T_c$ and a third circuit (3) for selecting the clock phase coupled to the second circuit (2) and to the generator (4) of the $2^Q$ clock signals including a clock phase decoder (64) addressed by the phase shift value $q_c$ coupled to an enabling circuit (60) for selecting one of the $2^Q$ clock signals corresponding to the calculated phase shift $q_c$ to form the synthesised clock signal so that the selected clock signal has the phase shift relative to the calculating clock which is closest to the calculated residual phase.

9. Device according to claim 8, characterised in that the generator of the $2^Q$ clock signals includes a network of flip-flops (95 ... 122) arranged in matrix form, each flip-flop providing a clock signal being at the intersection of a row and a column of the matrix organisation, each row being coupled to one output among the $2^B$ outputs of a ring divider (79) having a frequency $F_R = 2^B$ times the frequency of the calculating clock signal and each column being coupled to one of $2^c$ direct outputs complemented by a phase shifter of the signal of frequency $F_R$.

## Patentansprüche

1. Verfahren zur digitalen Synthese eines Taktsignals, bei dem das zu synthetisierende Taktsignal aus einer inkrementalen Phasenangabe $\Delta P$ abgeleitet wird, die für die zu synthetisierende Frequenz repräsentativ ist, wobei das Verfahren darin besteht, in jeder Periode $T_c$ eines Taktsignals eine Addition (6) modulo einer Binärzahl M von jedem Phaseninkrement zur Summe modulo M der bereits in einer Phasenakkumulatorvorrichtung einer Kapazität gleich der Binärzahl M aufsummierten Phaseninkremente durchzuführen und ein Kapazitätsüberschreitungssignal $R_{KM}$ zu erzeugen, dadurch gekennzeichnet, daß nach jeder Überschreitung der Kapazität der Akkumulatorvorrichtung (6) der Restphasenfehler $P_K$ aus der Akkumulatorvorrichtung ausgelesen wird (7), daß $2^Q$ Taktsignale einer Periode $T_c$, die untereinander einen Phasenabstand von $T_c/2^Q$ besitzen, erzeugt werden (4, 80), wobei Q eine vorbestimmte positive ganze Zahl ungleich Null ist, daß nach jeder Überschreitung der zeitliche Fehler $\Delta t_K$ berechnet wird (2, 23 ... 30), indem das Verhältnis $P_K/\Delta P$ zwischen dem Restphasenfehler $P_K$ und dem Phaseninkrement $\Delta P$ je Periode $T_c$ gebildet wird, und daß abhängig von dem berechneten zeitlichen Fehler $\Delta t_K$ dasjenige Taktsignal ausgewählt wird (3, 58 ... 60), dessen Phasenverschiebung bezüglich des berechneten Takts der gelesenen Restphase am nächsten kommt, um unter Kontrolle durch das Kapazitätsüberschreitungssignal $R_{KM}$ das zu synthetisierende Taktsignal $F_{SF}$ zu erzeugen.

2. Verfahren nach Anspruch 1, dadurch gekennzeichnet, daß die der berechneten Restphase am nächsten kommende Phasenverschiebung ($q_c$) ausgehend von einem abgerundeten Wert $q_E$ des zeitlichen Fehlers $\Delta t_K$ bestimmt wird, indem dieser Wert um einen Wert $2^Q$ verzögert wird, der die berechnete Taktperiode $T_c$ darstellt.

3. Verfahren nach den Ansprüchen 1 und 2, dadurch gekennzeichnet, daß das Verhältnis zwischen dem Restphasenfehler $P_K$ und dem Phaseninkrement $\Delta P$ von einem digitalen Teilerkreis des Typs Pipeline (24 ... 30) berechnet wird, dessen Stufen im Rhythmus des berechneten Taktsignals $T_c$ arbeiten.

4. Verfahren nach einem beliebigen der Ansprüche 1 bis 3, dadurch gekennzeichnet, daß das Phaseninkrement durch ein Inkrement moduliert wird, das für eine Frequenzmodulation repräsentativ ist.

5. Verfahren nach einem beliebigen der Ansprüche 1 bis 4, dadurch gekennzeichnet, daß ein für eine Phasenmodulation repräsentatives Phaseninkrement dem Inhalt der Akkumulatorvorrichtung zugefügt wird.

6. Verfahren nach einem beliebigen der Ansprüche 1 bis 5, dadurch gekennzeichnet, daß jede Kapazitätsüberschreitung $R_{KM}$ der Akkumulatorvorrichtung (6) durch das Vorzeichen der Differenz (22) zwischen zwei aufeinanderfolgenden Werten des Restphasenfehlers $P_K$ deutlich gemacht wird.

7. Verfahren nach einem beliebigen der Ansprüche 1 bis 6, dadurch gekennzeichnet, daß in der Phasenmodulation der Phaseninkrementwert $\Delta P$ in jedem Augenblick des berechneten Takts durch Addition (16) des jüngsten Werts des Restphasenfehlers mit der inkrementalen Phasenangabe $\Delta P$ und durch Subtraktion (18) des erhaltenen Resultats vom vorherigen Restphasenfehler erhalten wird, der an dem dem aktuellen Rechenzeitpunkt vorausgehenden Rechentaktzeitpunkt ermittelt wurde.

8. Vorrichtung zur digitalen Synthese eines Taktsignals, bei der das zu synthetisierende Taktsignal ausgehend von einer inkrementalen Phasenangabe $\Delta P$ erhalten wird, die für die zu synthetisierende Frequenz repräsentativ ist, dadurch gekennzeichnet, daß die Vorrichtung aufweist
   - einen Generator (4) von $2^Q$ Taktsignalen der Periode $T_c$, die regelmäßig zeitlich gestaffelt sind, wobei zwei aufeinanderfolgende Signale zueinander um einen Wert $T_c/2^Q$ phasenverschoben sind,
   - einen ersten Grobrechenkreis (1) für die Grobberechnung der Periode des zu synthetisierenden Signals und für die Bestimmung des Restphasenfehlers $P_K$, mit einem Phasenakkumulator (6), um die in jeder Periode $T_c$ des berechneten Taktsignals aufeinanderfolgenden Phaseninkremente aufzusummieren, und mit einem Kreis (9), um ein für jede Überschreitung der Kapazität des Akkumulators charakteristisches Signal zu liefern,
   - einen zweiten Phasen-Feinrechenkreis (2) zur Berechnung des Verhältnisses $q_c = P_K/\Delta P$, wobei $P_K$ der im Phasenakkumulator nach jeder Kapazitätsüberschreitung verbleibende Restphasenfehler ist, mit einer Mehrzahl von Addier-Subtrahierkreisen, die in Kaskade gemäß einer Pipelinestruktur (37, 42, 48, 52) gekoppelt sind, um den Phasenverschiebungswert $q_c$ über einer Periode $T_c$ zu berechnen,

- und einen dritten Kreis (3) zur Auswahl der Taktphase, der an den zweiten Kreis (2) und an den Generator (4) der $2^Q$ Taktsignale gekoppelt ist und einen Taktphasendekoder (64), der vom Phasenverschiebungswert $q_c$ adressiert wird und an einen Bestätigungskreis (60) gekoppelt ist, um eines der $2^Q$ Taktsignale entsprechend der berechneten Phasenverschiebung $q_c$ auszuwählen, das das synthetisierte Taktsignal bildet, so daß das ausgewählte Taktsignal die bezüglich dem berechneten Taktsignal der berechneten Restphase am nächsten kommende Phasenverschiebung besitzt.

9. Vorrichtung nach Anspruch 8, dadurch gekennzeichnet, daß der Generator für die $2^Q$ Taktsignale ein Netz (95 ... 102) von Kippstufen in Matrixanordnung enthält, wobei jede ein Taktsignal liefernde Kippstufe am Kreuzungspunkt einer Zeile und einer Spalte der Matrixanordnung liegt und jede Zeile an einen von $2^B$ Ausgängen eines Ringteilers (79) gekoppelt ist, der mit einer Frequenz $F_R$ getaktet ist, die $2^B$ mal der Frequenz des berechneten Taktsignals entspricht, und wobei jede Spalte an einen von 2C direkten und komplementären Ausgängen eines Phasenschiebers für das Signal der Frequenz $F_R$ gekoppelt ist.

EP 0 298 804 B1

FIG_1-a

FIG_1-b

FIG_1-c

EP 0 298 804 B1

FIG_2-a

FIG_2-b

FIG_2-c

17

FIG_3

FIG_4

FIG_5

| K | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|----|----|----|----|----|----|----|----|
| $\Delta P$ | 3 | 3 | 3 | 3 | 3 | 3 | 3 | 3 | 3 | 3 | 3 | 3 | 3 | 3 | 3 | 3 | 3 |
| $\Delta P_F$ | 0 | 0 | 0 | 0 | 0 | 0 | 0 | 0 | 0 | 0 | 0 | 1 | 1 | 1 | 1 | 1 | 1 |
| $P_P$ | 6 | 6 | 6 | 6 | 6 | 7 | 7 | 7 | 6 | 6 | 6 | 6 | 6 | 6 | 6 | 5 | 5 |
| $\Delta P_1$ | X | 3 | 3 | 3 | 3 | 3 | 3 | 3 | 3 | 3 | 3 | 3 | 4 | 4 | 4 | 4 | 4 |
| $P_{k2}$ | X | 0 | 3 | 6 | 9 | 2 | 5 | 8 | 1 | 4 | 7 | 0 | 3 | 7 | 1 | 5 | 9 |
| $P_{KM}$ | X | X | 6 | 9 | 2 | 5 | 8 | 2 | 5 | 8 | 0 | 3 | 6 | 9 | 3 | 7 | 1 |
| A | X | X | 9 | 9 | 9 | 9 | 10 | 10 | 10 | 9 | 9 | 9 | 9 | 10 | 10 | 10 | 9 |
| B | X | X | 6 | 6 | 6 | 6 | 6 | 7 | 7 | 7 | 6 | 6 | 6 | 6 | 6 | 6 | 6 |
| $\Delta P_{KM}$ | X | X | X | 3 | 3 | 3 | 3 | 4 | 3 | 3 | 2 | 3 | 3 | 3 | 4 | 4 | 4 |
| $R_{KM}$ | X | X | X | 0 | 1 | 0 | 0 | 1 | 0 | 0 | 1 | 1 | 0 | 0 | 1 | 0 | 1 |

# FIG_6-A

EP 0 298 804 B1

# FIG_6-B

20

# FIG_8

# FIG_7

| | DEC | BIN | Bit QUOTIENT<br>1 2 3 4 5 6 |
|---|---|---|---|
| $r_0 = X$ | 118 | 0 0 1 1 1 0 1 1 0 | |
| $2r_0$ | 236 | 0 1 1 1 0 1 1 0 0 | |
| $r_1 = 2r_0 - Y$ | 103 | 0 0 1 1 0 0 1 1 1 | 1 |
| $2r_1$ | 206 | 0 1 1 0 0 1 1 1 0 | |
| $r_2 = 2r_1 - Y$ | 73 | 0 0 1 0 0 1 0 0 1 | 1 1 |
| $2r_2$ | 146 | 0 1 0 0 1 0 0 1 0 | |
| $r_3 = 2r_2 - Y$ | 13 | 0 0 0 0 0 1 1 0 1 | 1 1 1 |
| $2r_3$ | 26 | 0 0 0 0 1 1 0 1 0 | |
| $r_4 = 2r_3 - Y$ | -107 | 1 1 0 0 1 0 1 0 1 | 1 1 1 0 |
| $2r_4$ | -214 | 1 0 0 1 0 1 0 1 0 | |
| $r_5 = 2r_4 + Y$ | -81 | 1 1 0 1 0 1 1 1 1 | 1 1 1 0 0 |
| $2r_5$ | -162 | 1 0 1 0 1 1 1 1 0 | |
| $r_6 = 2r_5 + Y$ | -29 | 1 1 1 1 0 0 0 1 1 | 1 1 1 0 0 0 |

# FIG_9

| K | PKM | R KM/VAL | $\dfrac{PKM}{\Delta PKM} 2^Q$ | qE | qC | IR |
|---|---|---|---|---|---|---|
| 1 | 0 | 0 | 0 | 0 | 0 | 1 |
| 2 | 5 | 0 | X | X | X | X |
| 3 | 2 | 1 | 3,2 | 3 | 5 | 0 |
| 4 | 7 | 0 | X | X | X | X |
| 5 | 4 | 1 | 6,4 | 6 | 2 | 0 |
| 6 | 1 | 1 | 1,6 | 2 | 6 | 0 |
| 7 | 6 | 0 | X | X | X | X |
| 8 | 3 | 1 | 4,8 | 5 | 3 | 0 |
| 9 | 0 | 1 | 0 | 0 | 0 | 1 |
| 10 | 5 | 0 | X | X | X | X |

FIG_10

FIG_11

FIG_12

## FIG_13

| GAIN DE TRAITEMENT dB | NOMBRE DE PHASES D HORLOGE | NOMBRE DE PHASES PRIMAIRES HR ET DEPHASAGE | NOMBRE D ETAGES PAR REGISTRE Y COMPRIS LE DIVISEUR | RESOLUTION TEMPORELLE n s |
|---|---|---|---|---|
| 18 | 8 | 1(360°) | 1 | 2,50 |
| 24 | 16 | 2(180°) | 2 | 1,25 |
| 30 | 32 | 4(90°) | 4 | 0,63 |
| 36 | 64 | 8(45°) | 8 | 0,31 |
| 42 | 128 | 16(22,5) | 16 | 0,16 |
| 48 | 256 | 32(11,25) | 32 | 0,08 |